# EUROPÄISCHE PATENTSCHRIFT

(11) **EP 2 465 337 B1**
(45) Veröffentlichungstag und Bekanntmachung des Hinweises auf die Patenterteilung: **04.09.2013**
(21) Anmeldenummer: 10015773.4
(22) Anmeldetag: 17.12.2010
(51) Int. Cl.: A01D 34/82

(54) **Handgeführtes Arbeitsgerät**
Manually operated work device
Appareil de travail manuel

(43) Veröffentlichungstag der Anmeldung: 20.06.2012
(60) Teilanmeldung: 13003637.9
(73) Patentinhaber: Viking GmbH, 6336 Langkampfen (AT)
(72) Erfinder: Vogler, Manfred, 5020 Salzburg (AT); Lechner, Hubert, 6341 Ebbs (AT); Buchauer, Siegfried, 6334 Schwoich (AT); Elfner, Jörg, 71336 Waiblingen (DE)
(74) Vertreter: Reinhardt, Annette

(56) Entgegenhaltungen:
- EP-A1- 1 342 401
- EP-A1- 1 623 615
- EP-A2- 1 902 608
- FR-A1- 2 481 879
- US-A- 4 422 283
- US-A- 4 991 298
- US-A- 5 425 225

## Beschreibung

Die Erfindung betrifft ein handgeführtes Arbeitsgerät der im Oberbegriff des Anspruchs 1 angegebenen Gattung.

Aus der DE 31 05 419 A1 ist ein handgeführtes Arbeitsgerät, nämlich ein Rasenmäher bekannt. Der Rasenmäher besitzt zum Führen auf dem Boden einen Grifflenker, der am hinteren Bereich des Gehäuses fixiert ist.

Es hat sich gezeigt, dass die Steifigkeit des Rasenmähergehäuses, insbesondere bei einschalig ausgeführten Gehäusen aus Kunststoff, bei der Krafteinleitung im hinteren Bereich des Gehäuses unzureichend sein kann.

Aus der EP 1 623 615 A1 ist ein Arbeitsgerät bekannt, das als Freischneider oder Kantenschneider einsetzbar ist. Das Führungsrohr des Arbeitsgeräts besitzt eine Teleskopeinrichtung zur Längenverstellung. Der äußere Abschnitt des Führungsrohrs ist am Grifflenker angeformt. Bei geöffneter Klemmeinrichtung kann der innere Abschnitt des Führungsrohrs aus dem äußeren Abschnitt des Führungsrohrs herausgezogen werden.

Der Erfindung liegt die Aufgabe zugrunde, ein handgeführtes Arbeitsgerät der gattungsgemäßen Art zu schaffen, bei dem ein vollständiges Herausziehen des inneren Abschnitts aus dem äußeren Abschnitt verhindert ist und das trotz der Auszugsbegrenzung eine Demontage der beiden Abschnitte des Führungsrohrs voneinander erlaubt.

Diese Aufgabe wird durch ein handgeführtes Arbeitsgerät mit den Merkmalen des Anspruchs 1 gelöst.

Das Führungsrohr besitzt eine Teleskopeinrichtung zur Längenverstellung. Die Teleskopeinrichtung verbindet einen inneren Abschnitt und einen äußeren Abschnitt des Führungsrohrs miteinander. Der innere Abschnitt kann dabei zur Längenverstellung in den äußeren Abschnitt eingeschoben bzw. aus diesem herausgezogen werden. Die Teleskopeinrichtung umfasst dabei eine Führungsbuchse, die mit dem inneren Abschnitt in vollständig ausgezogener Stellung der Teleskopeinrichtung, also bei maximaler Länge des Führungsrohrs, einen Anschlag bildet. Der Anschlag verhindert ein vollständiges Herausziehen des inneren Abschnitts aus dem äußeren Abschnitt. Um trotz der Auszugsbegrenzung eine Demontage der beiden Abschnitte des Führungsrohrs voneinander zu erlauben, ist vorgesehen, dass die Führungsbuchse in mindestens einer Stellung des inneren Abschnitts an dem äußeren Abschnitt lösbar fixiert ist. Dadurch kann die Führungsbuchse zusammen mit dem inneren Abschnitt aus dem äußeren Abschnitt entfernt werden. Im Betrieb ist die Führungsbuchse fest an dem äußeren Abschnitt gehalten. Eine lösbare Fixierung der Führungsbuchse an dem äußeren Abschnitt ist insbesondere bei Führungsrohren vorteilhaft, deren beide Abschnitte nicht über die gesamte Länge rohrförmig ausgebildet sind, so dass der innere Abschnitt nicht von dem Anschlag weg durch den äußeren Abschnitt hindurch geschoben und so demontiert werden kann.

Eine einfache konstruktive Gestaltung ergibt sich, wenn die Führungsbuchse mindestens ein Rastelement besitzt, das in einer Öffnung des äußeren Abschnitts verrastet ist. Zum Lösen der Verrastung ist insbesondere vorgesehen, dass der innere Abschnitt eine Aussparung besitzt, in die das Rastelement zum Lösen der Verrastung ausgelenkt werden kann. Eine besonders vorteilhafte Gestaltung ergibt sich, wenn die Aussparung am Ende des inneren Abschnitts angeordnet ist. Dadurch ist ein Lösen des inneren Abschnitts des Führungsrohrs nur bei vollständig ausgezogener Teleskopeinrichtung möglich. Die Führungsbuchse besteht insbesondere aus Kunststoff. Dadurch werden gute Gleiteigenschaften zwischen dem Führungsrohr und der Führungsbuchse erreicht.

Die Teleskopeinrichtung besitzt insbesondere eine lösbare Klemmeinrichtung, die die beiden Abschnitte des Führungsrohrs fest miteinander verbindet. Die Klemmung kann einfach und schnell vom Bediener gelöst werden. Es ergibt sich eine feste und gleichzeitig leicht verstellbare Gestaltung.

Um eine einfache und schnelle Betätigung zu ermöglichen, ist vorgesehen, dass die Klemmeinrichtung einen exzentrisch gelagerten Betätigungshebel besitzt. Über den Betätigungshebel kann die Klemmeinrichtung einfach gelöst und fixiert werden. Ein aufwändiges Lösen von Bedienschrauben oder dgl. ist nicht notwendig, so dass sich eine einfache Bedienung ergibt. Um auch nach Verschleiß der Bauteile oder längerer Betriebszeit eine gute Fixierung der Klemmeinrichtung sicherzustellen, ist insbesondere vorgesehen, dass die Klemmkraft der Klemmeinrichtung einstellbar ist. Eine einfache Gestaltung ergibt sich, wenn die Klemmeinrichtung eine Klemmhülse und ein Klemmstück besitzt, die von gegenüberliegenden Seiten gegen den Außenumfang des Führungsrohrs wirken. Der Betätigungshebel ist dabei vorteilhaft an der Klemmhülse gelagert und wirkt gegen das Klemmstück. Aufgrund des Drucks von Klemmhülse und Klemmstück an gegenüberliegenden Seiten des Führungsrohrs wird das Führungsrohr elastisch verformt. Um die Verformung zu erleichtern, kann das Führungsrohr einen oder mehrere in Längsrichtung verlaufende Schlitze besitzen. Durch die Verformung werden der äußere Abschnitt des Führungsrohrs, die Führungsbuchse und der innere Abschnitt des Führungsrohrs zusammengedrückt und die beiden Abschnitte so geklemmt gehalten. Vorteilhaft besitzt die Klemmeinrichtung zur Einstellung der Klemmkraft eine Einstellmutter, die in Wirkrichtung zwischen dem Betätigungshebel und dem Klemmstück angeordnet ist und deren Abstand zum Klemmstück einstellbar ist.

Um ein unbeabsichtigtes Verdrehen des Grifflenkers zu vermeiden, ist vorgesehen, dass die beiden Abschnitte des Führungsrohrs im Bereich der Teleskopeinrichtung in Umfangsrichtung formschlüssig miteinander verbunden sind. Dies kann beispielsweise durch entsprechende Profilierung der Führungsrohrabschnittc in Längsrichtung erfolgen.

Das Gehäuse besitzt insbesondere mindestens eine Versteifungsstrebe, die sich von dem hinteren Bereich des Gehäuses zu einem vorderen Bereich des Gehäuses erstreckt, wobei der Grifflenker mit der Versteifungsstrebe verbunden ist. Die Verbindung des Grifflenkers mit einer Versteifungsstrebe des Gehäuses, die den hinteren Bereich des Gehäuses mit dem vorderen Bereich des Gehäuses verbindet, erlaubt eine verbesserte Krafteinleitung und Kraftverteilung. Die Bedienkräfte werden nicht nur im hinteren Bereich des Gehäuses, sondern über die Versteifungsstrebe auch in den vorderen Bereich des Gehäuses geleitet. Dadurch kann das Gehäuse leicht und insbesondere aus Kunststoff und einschalig ausgebildet sein. Dadurch ergibt sich ein einfacher Aufbau des Arbeitsgeräts.

Vorteilhaft ist die Versteifungsstrebe mit dem Grifflenker formschlüssig verbunden. Die formschlüssige Verbindung kann durch die Formgebung erfolgen, so dass keine zusätzlichen Befestigungsmittel oder dgl. benötigt werden. Vorteilhaft besteht die formschlüssige Verbindung lediglich in einer Richtung, nämlich in der Richtung, in der die Bedienkräfte üblicherweise eingeleitet werden.

Insbesondere sind zwei Versteifungsstreben vorgesehen, die mit einer die Versteifungsstreben verbindenden Abdeckung eine Motorhaube des Arbeitsgeräts bilden. Für die Versteifungsstreben wird demnach kein zusätzliches Bauteil benötigt, sondern die ohnehin vorhandene Motorhaube kann mit ihren in Längsrichtung verlaufenden Versteifungsrippen zur Abstützung und Einleitung der Bedienkräfte genutzt werden.

Vorteilhaft besitzt der Grifflenker eine Befestigungskonsole. Die Befestigungskonsole ist insbesondere im hinteren Bereich des Gehäuses an dem Gehäuse festgelegt und mit der Versteifungsstrebe verbunden. Über die Befestigungskonsole kann auf einfache Weise eine stabile Anbindung des Grifflenkers an das Gehäuse und an die Versteifungsstrebe erfolgen.

Die Befestigungskonsole kann dabei aus einem formstabilen Material wie Metall oder glasfaserverstärktem Kunststoff bestehen, so dass sich eine hohe Festigkeit ergibt. Insbesondere ist die Befestigungskonsole ein Aluminiumdruckgussteil. Insbesondere erstreckt sich die Befestigungskonsole über mehr als drei Viertel der Breite des Gehäuses. Die Befestigungskonsole ist dabei vorteilhaft benachbart zu den beiden Längsseiten des Arbeitsgeräts an dem Gehäuse festgelegt. Durch die Anbindung an beiden Längsseiten des Gehäuses ergibt sich eine gleichmäßige Krafteinleitung an beiden Gehäuseseiten. Zur symmetrischen Krafteinleitung ist insbesondere eine Fixierung an beiden Längsseiten des Gehäuses und eine Verbindung mit zwei symmetrisch zur Mitte des Rasenmähergehäuses angeordneten Versteifungsstreben vorgesehen.

Vorteilhaft ist der Grifflenker einarmig ausgebildet. Das Führungsrohr des Grifflenkers verläuft dabei insbesondere an einer Längsseite des Arbeitsgeräts. Dadurch wird die Zugänglichkeit zu dem Arbeitsgerät deutlich verbessert. Insbesondere bei der Ausbildung des Arbeitsgeräts als Rasenmäher wird die Zugänglichkeit zu einem in Fahrtrichtung zwischen Gehäuse und Griffabschnitt des Grifflenkers angeordneten Grasfangkorb deutlich verbessert.

Ein einfacher Aufbau ergibt sich, wenn der Grifflenker ein einteiliges Lenkeroberteil umfasst, das einen Kanal besitzt, der sich durch einen am Lenkeroberteil angeformten Abschnitt des Führungsrohrs und den am Lenkeroberteil ausgebildeten Griffabschnitt erstreckt. Der Kanal ermöglicht ein geringes Gewicht bei hoher Steifigkeit des Lenkeroberteils. Dadurch, dass sich der Kanal auch durch den Griffabschnitt erstreckt, ist das Gewicht und damit das auf den Rasenmäher ausgeübte Kippmoment verringert, so dass ein Umkippen des Rasenmähers auch bei vollständig gefülltem Grasfangkorb vermieden werden kann. Das Lenkeroberteil besteht dabei insbesondere aus Kunststoff. Der untere Abschnitt des Führungsrohrs besteht vorteilhaft aus Metall und ist insbesondere ein Aluminiumrohr. Die Befestigungskonsole besteht insbesondere aus Metall und ist vorteilhaft ein Aluminiumdruckgussteil.

Ein Ausführungsbeispiel der Erfindung wird im Folgenden anhand der Zeichnung erläutert. Es zeigen:
- Fig. 1: eine perspektivische Darstellung eines Rasenmähers,
- Fig. 2: den Grifflenker des Rasenmähers aus Fig. 1 in perspektivischer Darstellung,
- Fig. 3: eine Ansicht des Lenkeroberteils von unten,
- Fig. 4: eine ausschnittsweise Schnittdarstellung von Motorhaube und Befestigungskonsole im Bereich der Verbindung der beiden Teile,
- Fig. 5: eine perspektivische Darstellung der Teleskopeinrichtung des Grifflenkers,
- Fig. 6 und 7: Schnitte durch den Grifflenker aus Fig. 3,
- Fig. 8: einen Schnitt entlang der Linie VIII-VIII in Fig. 6,
- Fig. 9: eine perspektivische Darstellung von Führungsbuchse und innerem Abschnitt des Führungsrohrs mit am Anschlag anliegender Führungsbuchse,
- Fig. 10: eine perspektivische Darstellung der Anordnung aus Fig. 9 mit vom Anschlag weggeschobener Führungsbuchse,
- Fig. 11: eine perspektivische Darstellung der Klappeinrichtung,
- Fig. 12 und 13: Schnitte durch die Klappeinrichtung aus Fig. 11,
- Fig. 14: einen Schnitt entlang der Linie XIV-XIV in Fig. 13 und
- Fig. 15: eine perspektivische Darstellung des Versteifungselements.

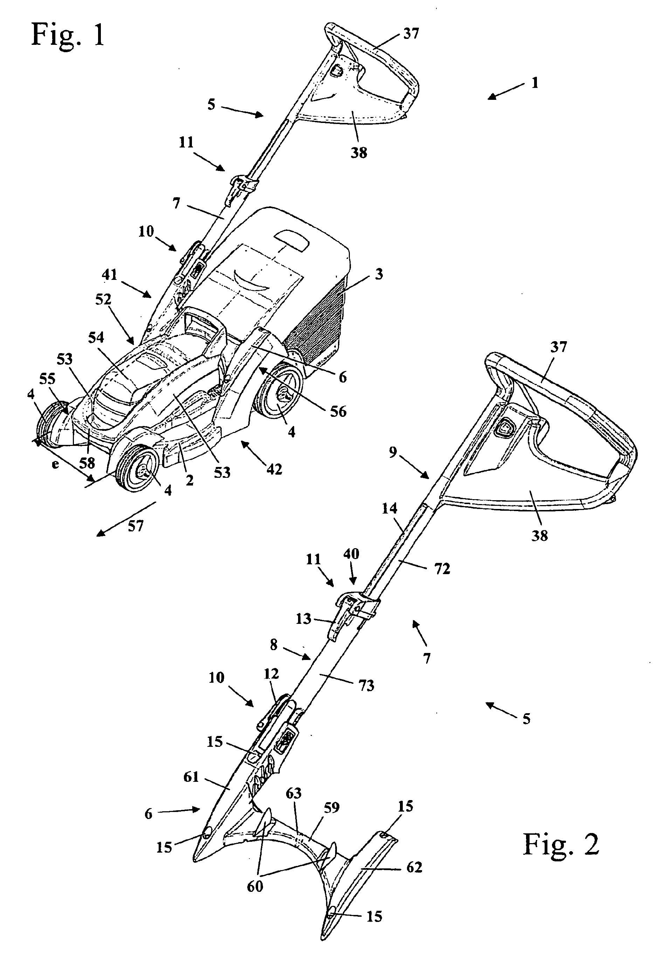

Fig. 1 zeigt als Ausführungsbeispiel für ein handgeführtes Arbeitsgerät einen Rasenmäher 1. Der Rasenmäher 1 besitzt ein Gehäuse 2, an dem vier Räder 4 gelagert sind. Die Räder 4 stehen auf dem Boden auf. Am Gehäuse 2 ist ein abnehmbarer Grasfangkorb 3 festgelegt, in den das geschnittene Schnittgut gefördert wird. Am Gehäuse 2 ist außerdem ein Grifflenker 5 festgelegt, der einen Griffabschnitt 37 besitzt, an dem der Bediener den Grifflenker 5 greifen und den Rasenmäher 1 über den Boden schieben kann.

Der Rasenmäher 1 besitzt eine erste Längsseite 41 und eine zweite Längsseite 42. Die Längsseiten 41 und 42 sind dabei die Seiten des Rasenmähers 1, die parallel zur Fahrtrichtung 57 liegen. Der Grifflenker 5 ist einarmig ausgebildet. Er besitzt ein einziges Führungsrohr 7, das mit einer Befestigungskonsole 6 an einem hinteren Bereich 56 des Gehäuses 2 des Rasenmähers 1 fixiert ist. Das Führungsrohr 7 verläuft an der ersten Längsseite 41 des Rasenmähers 1 benachbart zum Grasfangkorb 3. Von der gegenüberliegenden, zweiten Längsseite 42 ist der Grasfangkorb 3 frei zugänglich.

Der hintere Bereich 56 des Gehäuses 2 ist der in Fahrtrichtung 57 hinten liegende, dem Grasfangkorb 3 zugewandte Bereich. Das Gehäuse 2 besitzt außerdem einen vorderen Bereich 55, der sich benachbart zu den Vorderrädern erstreckt. Am Gehäuse 2 ist ein nicht gezeigter Antriebsmotor angeordnet, der insbesondere ein elektrischer Motor ist. Der Antriebsmotor ist unter einer Motorhaube 52 angeordnet, die am Gehäuse 2 festgelegt ist. Die Motorhaube 52 besitzt zwei in Längsrichtung des Gehäuses 2, also in Fahrtrichtung 57 verlaufende, seitliche Versteifungsstreben 53. Die Versteifungsstreben 53 erstrecken sich benachbart zu den Längsseiten 41 und 42 des Rasenmähers 1. Die beiden Versteifungsstreben 53 sind im vorderen Bereich 55 über eine Verbindung 58 miteinander verbunden und im vorderen Bereich am Gehäuse 2 festgelegt. Die Motorhaube 52 ist fest mit dem Gehäuse 2 verbunden, insbesondere durch Verschrauben. Zwischen den beiden Versteifungsstreben 53 erstreckt sich eine Abdeckung 54, die den Antriebsmotor abdeckt. Die beiden Versteifungsstreben 53 sind im Querschnitt etwa U-förmig ausgebildet und bilden zusammen mit der Abdeckung 54 die einteilige Motorhaube 52. Die Motorhaube 52 kann auch mehrteilig ausgebildet sein.

Das Motorgehäuse 2 besitzt eine quer zur Fahrtrichtung gemessene Breite e. Wie Fig. 1 zeigt, erstreckt sich die Befestigungskonsole 6 über die gesamte Breite e des Gehäuses 2. Vorteilhaft erstreckt sich die Befestigungskonsole 6 mindestens über 2/3 der Breite e.

Das Führungsrohr 7 besitzt eine Klappeinrichtung 10, so dass der Grifflenker 5 nach vorne auf das Gehäuse 2 abgeklappt werden kann. Dadurch kann der Rasenmäher 1 einfacher transportiert werden. Außerdem besitzt der Grifflenker 5 eine Teleskopeinrichtung 11, die eine Verstellung der Länge des Führungsrohrs 7 erlaubt. Dadurch kann die Höhe des Griffabschnitts 37 an den Benutzer angepasst werden. Benachbart zum Griffabschnitt 37 besitzt der Grifflenker 5 eine Griffplatte 38, an der Bedienelemente des Rasenmähers 1 angeordnet sein können.

Fig. 2 zeigt die Gestaltung des Grifflenkers 5 im Einzelnen. Die Befestigungskonsole 6 besteht aus Aluminiumdruckguss und ist als Formteil ausgebildet. Die Befestigungskonsole 6 kann jedoch auch aus einem anderen Material hoher Festigkeit wie beispielsweise aus glasfaserverstärktem Kunststoff bestehen. Sie besitzt insgesamt vier Befestigungsöffnungen 15 für Befestigungsschrauben, wobei jeweils zwei Befestigungsöffnungen 15 an jeder Längsseite 41, 42 des Rasenmähers 1 angeordnet sind. Die an jeder Längsseite 41, 42 angeordneten beiden Befestigungsöffnungen 15 besitzen in Fahrtrichtung 57 zueinander einen Abstand. Dadurch ergibt sich eine etwa H-förmige Gestalt der Befestigungskonsole 6. Dadurch kann eine gute Krafteinleitung in das Gehäuse 2 erreicht werden. Die Befestigungskonsole 6 besitzt zwei Längsholme 61 und 62, die sich etwa in Fahrtrichtung 57 an den Längsseiten 41 und 42 erstrecken und an denen jeweils zwei Befestigungsöffnungen 15 angeordnet sind. Die beiden Längsholme 61 und 62 sind über einen Querholm 59 miteinander verbunden, der quer zur Fahrtrichtung angeordnet ist. Der Querholm 59 besitzt Abstützungen 60, deren Funktion im Folgenden noch näher erläutert wird. Es kann auch vorgesehen sein, dass die Befestigungskonsole 6 nur einen Längsholm 61 aufweist, und dass der Querholm 59 stark verkürzt ausgebildet ist. Den verkürzten Querholm 59 zeigt die gestrichelte Linie 63 in Fig. 2 schematisch. Bei dieser Gestaltung erstreckt sich die Befestigungskonsole 6 nur über etwa die Hälfte der Breite e des Gehäuses 2.

Mit den nicht gezeigten Befestigungsschrauben ist die Befestigungskonsole 6 am Gehäuse 2 fixiert. Das Führungsrohr 7 besitzt ein Lenkerunterteil 8 und ein Lenkeroberteil 9. Das Lenkerunterteil 8 umfasst einen äußeren Abschnitt 73 des Führungsrohrs 7. Der äußere Abschnitt 73 des Führungsrohrs 7 besteht vorteilhaft aus Metall. Im Ausführungsbeispiel ist der äußere Abschnitt 73 als Aluminiumrohr ausgebildet und über die Klappeinrichtung 10 an der Befestigungskonsole 6 festgelegt. Zum Lösen besitzt die Klappeinrichtung 10 einen Betätigungshebel 12. Das Lenkerunterteil 8 ist mit dem Lenkeroberteil 9 über die Teleskopeinrichtung 11 verbunden. Die Teleskopeinrichtung 11 besitzt eine Klemmeinrichtung 40 zur Fixierung der beiden Lenkerteile 8 und 9 gegeneinander. Zum Klemmen und Lösen ist ein Betätigungshebel 13 vorgesehen. Das Lenkeroberteil 9 umfasst einen inneren Abschnitt 72 des Führungsrohrs 7, den Griffabschnitt 37 und die Griffplatte 38 und besteht aus Kunststoff. Vorteilhaft ist der innere Abschnitt 72 mit dem Griffabschnitt 37 und der Griffplatte 38 einteilig und teilweise als Hohlteil in einem Fluidinnendruckverfahren hergestellt. Das Lenkeroberteil 9 kann jedoch auch mehrteilig ausgebildet sein. Wie Fig. 2 auch zeigt, besitzt der innere Abschnitt 72 eine Längsnut 14, deren Funktion im Folgenden noch näher erläutert wird.

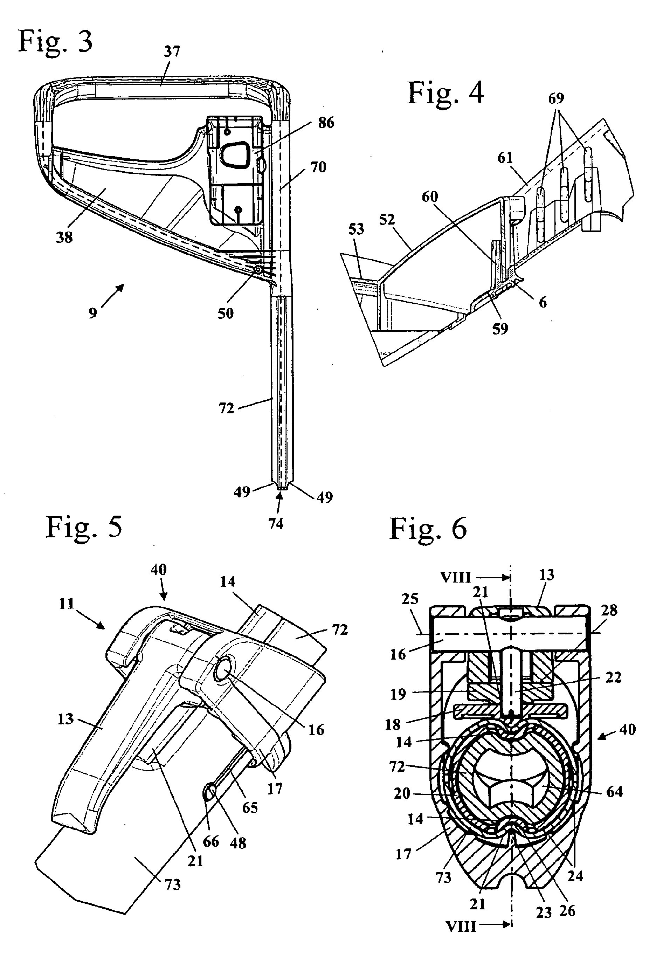

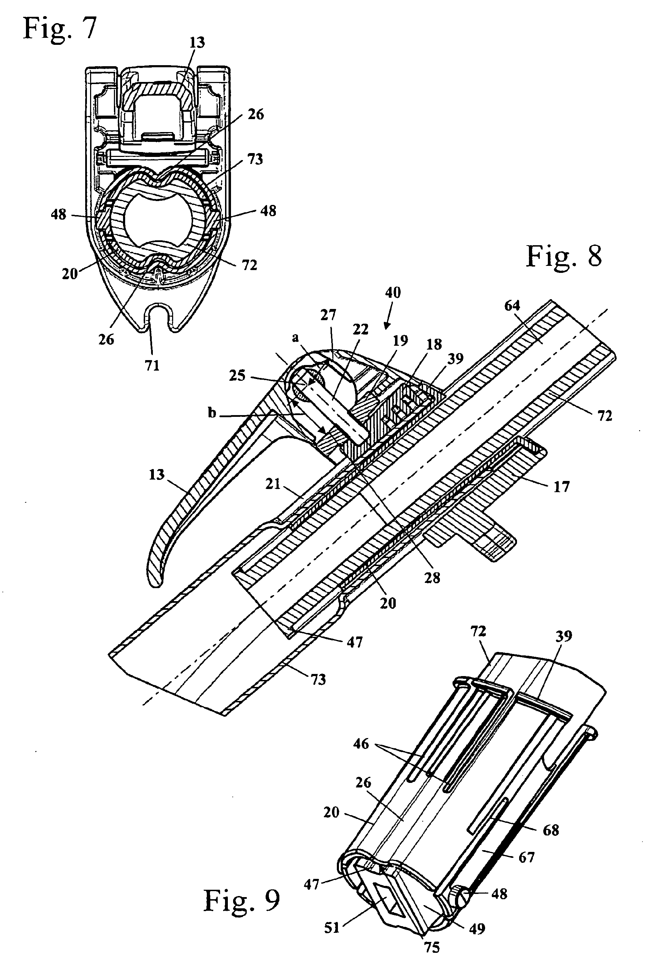

Fig. 3 zeigt die Gestaltung des Lenkeroberteils 9 im Einzelnen. Die an der Aufnahme 86 für die Bedienelemente am Lenkeroberteil 9 lösbar angeordnete Abdeckung ist dabei in Fig. 3 nicht gezeigt. Das Lenkeroberteil 9 besitzt einen in Fig. 6 gezeigten Kanal 64, der sich durch den inneren Abschnitt 72, den Griffabschnitt 37 sowie an der Außenseite der Griffplatte 38 entlang zurück bis zum inneren Abschnitt 72 erstreckt. Der Verlauf des Kanals 64 ist in Fig. 3 durch die gestrichelte Linie 70 angedeutet. Benachbart zum Griffabschnitt 37 ist eine Öffnung 50 am Kanal 64 vorgesehen, durch die ein Fluid wie Wasser oder ein Gas bei der Herstellung des Lenkeroberteils 8 in den Kanal 64 eintreten und diesen ausformen kann. An seinem dem Griffabschnitt 37 abgewandten Ende 74 besitzt der innere Abschnitt 72 des Führungsrohrs 7 die in Fig. 9 gezeigte Öffnung 51. Über die Öffnung 51 kann das Fluid austreten. Dadurch kann das Lenkeroberteil 9 mit hoher Festigkeit und geringem Gewicht in einem Fluidinnendruckverfahren spritzgegossen werden.

Fig. 4 zeigt die Verbindung von Befestigungskonsole 6 und Motorhaube 52 im Einzelnen. Die Abstützungen 60 liegen an einem Wandabschnitt der Motorhaube 52 an und bilden dadurch eine formschlüssige Verbindung zwischen dem Führungsrohr 7 und den Versteifungsstreben 53. Die Abstützungen 60 sind dabei vorteilhaft benachbart zu den Versteifungsstreben 53 angeordnet, so dass sich eine gute Krafteinleitung ergibt.

Wie Fig. 4 auch zeigt, sind am ersten Längsholm 61 Kabelführungen 69 angeformt, die hakenförmig ausgebildet sind und in die ein Verbindungskabel zur Verbindung des Antriebsmotors mit an der Griffplatte 38 angeordneten Bedienelementen angeordnet werden kann. Separate Elemente zur Kabelführung können dadurch entfallen.

Die Fig. 5 bis 10 zeigen die Gestaltung der Teleskopeinrichtung 11 im Einzelnen. Die Teleskopeinrichtung 11 umfasst eine Klemmhülse 17, die Teil der Klemmeinrichtung 40 ist. An der Klemmhülse 17 ist der Betätigungshebel 13 mit einem Lagerbolzen 16 schwenkbar gelagert. Der innere Abschnitt 72 des Führungsrohrs 7 ist im Außendurchmesser kleiner ausgebildet als der äußere Abschnitt 73 und ragt in den äußeren Abschnitt 73. Auch der äußere Abschnitt 73 besitzt eine Längsnut 21.

Wie Fig. 6 zeigt, sind jeweils auf gegenüberliegenden Seiten des Führungsrohrs 7 zwei Längsnuten 14 im inneren Abschnitt 72 und zwei Längsnuten 21 im äußeren Abschnitt 73 ausgebildet. In radialer Richtung zwischen den beiden Abschnitten 72 und 73 ist die auch in den Fig. 8 bis 10 gezeigte Führungsbuchse 20 angeordnet. Die beiden Abschnitte 72 und 73 greifen mit ihren Längsnuten 14 und 21 ineinander bzw. in die Führungsbuchse 20 und bilden so eine in Umfangsrichtung formschlüssige Fixierung. Dadurch können die beiden Abschnitte 72 und 73 nicht gegeneinander verdreht werden.

Die Fig. 5 bis 8 zeigen den Betätigungshebel 13 in fixierter Stellung der Klemmeinrichtung 40. Der Betätigungshebel 13 ist um eine Schwenkachse 25 schwenkbar gelagert. Der Betätigungshebel 13 besitzt eine erste Anlagefläche 27, die zur Schwenkachse 25 einen ersten Abstand a besitzt und eine zweite Anlagefläche 28, die zur Schwenkachse 25 einen zweiten, größeren Abstand b besitzt. In der fixierten Stellung wirkt der Betätigungshebel 13 über die zweite Anlagefläche 28 auf eine Einstellmutter 19. Die Einstellmutter 19 ist in ein Außengewinde eines Spannbolzens 22 eingeschraubt, der durch den Lagerbolzen 16 ragt und gegenüber dem Lagerbolzen 16 verschiebbar ist. Der Spannbolzen 22 wirkt auf ein Klemmstück 18, das in die Nut 21 des äußeren Abschnitts 73 drückt. Wird die Einstellmutter 19 vom Klemmstück 18 weggeschraubt, so vergrößert sich der Abstand zwischen Klemmstück 18 und Einstellmutter 19. Dadurch wird die Klemmkraft vergrößert. Dadurch, dass der Lagerbolzen 16 in der Klemmhülse 17 gelagert ist, drückt die Klemmeinrichtung 40 die Klemmhülse 17 und das Klemmstück 18 von gegenüberliegenden Seiten gegen den Außenumfang des äußeren Abschnitts 73. Wie Fig. 6 zeigt, besitzt die Klemmhülse 17 an ihrem Innenumfang mehrere Klemmrippen 24, die auf das Führungsrohr 7.wirken. Im Bereich der dem Klemmstück 18 gegenüberliegenden Längsnut 21 ist eine Führungsrippe 23 angeordnet, die zum Einen zur Lagesicherung in Umfangsrichtung und zum Anderen zum Ausüben der Klemmkraft dient.

Wie Fig. 6 zeigt, besitzt auch die Lagerhülse 20 zwei in Längsrichtung verlaufende Längsnuten 26. Der Innenbereich jeder Vertiefung 21 und 26 des äußeren Abschnitts 73 und der Führungsbuchse 20 greifen jeweils in die zugeordnete Längsnut 26, 14 der Führungsbuchse 20 und des inneren Abschnitts 72, um so eine verdrehsichere Verbindung der beiden Abschnitte zu bewirken.

Wie Fig. 5 zeigt, besitzt der äußere Abschnitt 73 des Führungsrohrs 7 im Bereich der Teleskopeinrichtung 11 Schlitze 65, die sich von der Stirnseite des äußeren Abschnitts 73 über eine Länge erstrecken, die etwa der Länge der Führungsbuchse 20 entspricht. Es sind zwei einander gegenüberliegend angeordnete Schlitze 65 vorgesehen, von denen in Fig. 5 einer gezeigt ist. Am Ende jedes Schlitzes 65 ist eine kreisförmige Öffnung 66 ausgebildet, deren Durchmesser größer als die Breite des Schlitzes 65 ist und in die ein an der Führungsbuchse 20 ausgebildeter Zapfen 48 ragt. Dies ist auch in Fig. 7 gezeigt. Aufgrund der Zapfen 48 ist die Führungsbuchse 20 in dem äußeren Abschnitt 73 des Führungsrohrs 7 in ihrer Lage fixiert. Ein axiales Verschieben der Führungsbuchse 20 gegenüber dem äußeren Abschnitt 73 ist nicht möglich.

Wie Fig. 7 zeigt, ist an der Teleskopeinrichtung 11 eine Kabelführung 71 integriert, in die ein Verbindungskabel zwischen am Griff angeordneten Bedienelementen und dem Antriebsmotor eingeklipst werden kann. Durch die einteilige Ausbildung mit der Klemmhülse 17 werden für die Kabelführung 71 keine zusätzlichen Bauteile benötigt.

Wie Fig. 8 zeigt, besitzt die Führungsbuchse 20 einen Rand 39, der an einer Stirnseite der Klemmhülse 17 anliegt. Die Führungsbuchse 20 ist im Ausführungsbeispiel leicht konisch ausgebildet. Der innere Bereich der Führungsbuchse 20 liegt am inneren Abschnitt 72 an und der äußere Bereich am äußeren Abschnitt 73. Durch die konische Form der Führungsbuchse 20 kann die Führungsbuchse 20 bei der Herstellung im Kunststoffspritzguss leicht entformt werden. Wie Fig. 8 auch zeigt, ist die Einstellmutter 19 von dem benachbart zum Führungsrohr 7 liegenden, in geklemmtem Zustand unterhalb des Betätigungshebels 13 angeordneten Bereich aus zugänglich. Wird der Betätigungshebel 13 um die Schwenkachse 25 verschwenkt, so kommt die erste Anlagefläche 27 zur Anlage an die Einstellmutter 19. Aufgrund des kleineren ersten Abstands a liegen das Klemmstück 18 und die Klemmhülse 17 in diesem Zustand nur lose am Führungsrohr 7 an, so dass die beiden Abschnitte 72 und 73 gegeneinander verschoben werden können.

Wie Fig. 8 zeigt, besitzt der innere Abschnitt 72 des Führungsrohrs 7 an seinem in den äußeren Abschnitt 73 ragenden Ende einen radial nach außen gerichteten Absatz 47. Wie Fig. 9 zeigt, bildet der Absatz 47 mit dem unteren Rand der Führungsbuchse 20 einen Anschlag 75, der ein weiteres Herausziehen des inneren Abschnitts 72 aus dem äußeren Abschnitt 73 verhindert. Der Absatz 47 ist im Bereich der Längsnut 26 angeordnet, die als in Längsrichtung verlaufende Vertiefung in der Führungsbuchse 20 ausgebildet ist.

Wie Fig. 9 zeigt, besitzt die Führungsbuchse 20 mehrere Längsschlitze 46, die sich vom Rand 39 bis in einen mittleren Bereich der Führungsbuchse 20 erstrecken. Die Längsschlitze 46 erhöhen die Elastizität der Führungsbuchse 20 in radialer Richtung, so dass die Führungsbuchse 20 zur Klemmung gut zusammengedrückt werden kann. Wie Fig. 9 auch zeigt, ist der Zapfen 48 am freien Ende eines Arms 67 angeordnet, der durch Schlitze 68 vom umgebenden Bereich der Führungsbuchse 20 getrennt ist. Der Arm 67 ist aufgrund seiner Länge und aufgrund der Eigenelastizität des Materials der Führungsbuchse, insbesondere des Kunststoffs, elastisch. Wie Fig. 9 zeigt, besitzt der innere Abschnitt 72 an seinem freien Ende jeweils benachbart zu den Zapfen 48 Vertiefungen 49. Die Vertiefungen 49 erlauben in vollständig nach außen gezogener Stellung des inneren Abschnitts 72, wie sie in Fig. 9 gezeigt ist, ein Drücken der Zapfen 48 nach innen aus den in Fig. 5 gezeigten Öffnungen 66. Dadurch kann die Verrastung gelöst werden.

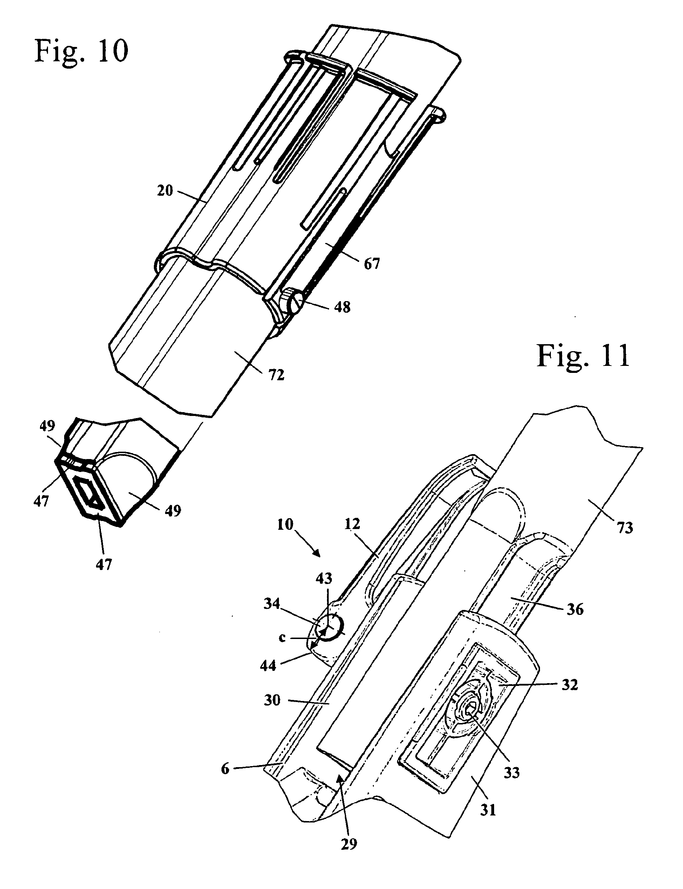

Fig. 10 zeigt die Führungsbuchse 20 mit dem inneren Abschnitt 72 in nicht vollständig ausgezogener Stellung. Die Führungsbuchse 20 liegt in einem mittleren Bereich des inneren Abschnitts 72 an. Die Arme 67 liegen an der Außenwand des Führungsrohrs 7 an und können nicht nach innen verschwenkt werden. Diese Stellung ist auch in Fig. 7 gezeigt. Dadurch kann die Verrastung zwischen Führungsbuchse 20 und äußerem Abschnitt 73 bei der in den Figuren 7 und 10 gezeigten Stellung des inneren Abschnitts 72 des Führungsrohrs 7 nicht gelöst werden.

Die Fig. 11 bis 14 zeigen die Klappeinrichtung 10 im Einzelnen. Der Betätigungshebel 12 der Klappeinrichtung 10 ist an einem Lagerbolzen 34 um eine Schwenkachse 43 schwenkbar gelagert. Wie die Fig. 11 bis 13 zeigen, sind am Betätigungshebel 12 zwei Anlageflächen 44 und 45 ausgebildet, die einen unterschiedlichen Abstand zur Schwenkachse 43 haben. Auch der Betätigungshebel 12 ist damit exzentrisch gelagert. Zur ersten Anlagefläche 44 besitzt die Schwenkachse 43 einen ersten Abstand c und zur Anlagefläche 45 einen zweiten, größeren Abstand d.

Wie Fig. 11 zeigt, wirkt der Betätigungshebel 12 gegen eine Scheibe 35, die an einer Klemmplatte 32 angeordnet ist. Die Klemmplatte 32 ist an einem ersten Arm 30 der Befestigungskonsole 6 angeordnet. An der gegenüberliegenden Seite des äußeren Abschnitts 73 des Führungsrohrs 7 ist ein zweiter Arm 31 angeordnet. Zwischen den beiden Armen 30 und 31 ist eine Aufnahme 29 für das Führungsrohr 7 gebildet. Die beiden Arme 30 und 31 sind so ausgebildet, dass sie aufgrund der Eigenelastizität des Materials elastisch sind und verformt werden können. Auch am zweiten Arm 31 ist eine Klemmplatte 32 angeordnet. Beide Klemmplatten 32 sind ebenso wie das Führungsrohr 7 von einer Schraube 33 durchragt, die in den Lagerbolzen 34 eingeschraubt ist. Durch Verstellung der Schraube 33. kann die Klemmkraft der Klappeinrichtung 10 eingestellt werden.

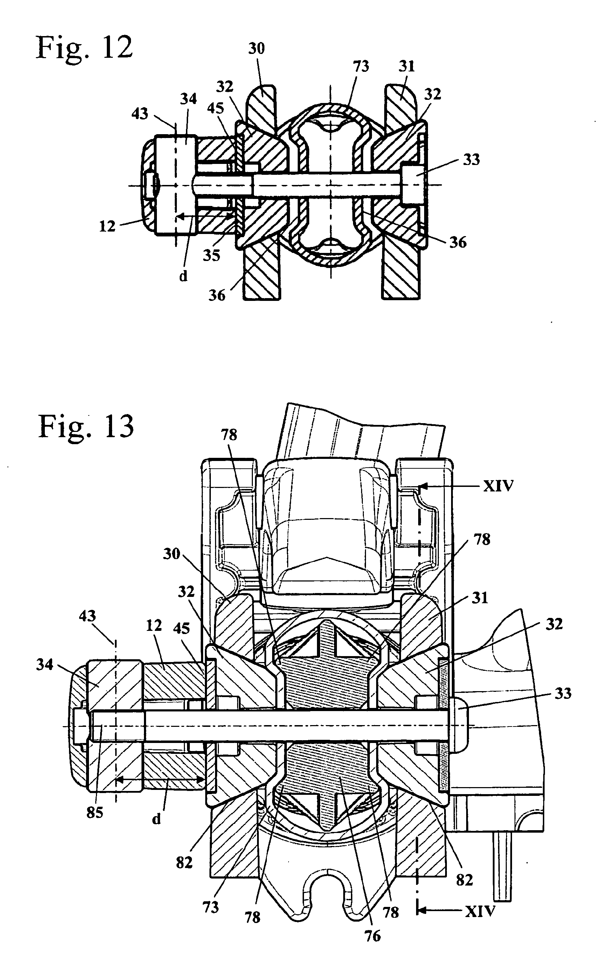

Der äußere Abschnitt 73 des Führungsrohrs 7 besitzt an den beiden den Armen 30 und 31 zugewandten Seiten jeweils eine Vertiefung 36. Die Seitenwände der Vertiefung 36 sind aufeinander zu geneigt. Die Klemmplatten 32 sind im Querschnitt an die Vertiefungen 36 angepasst. Die Klemmplatten 32 besitzen eine annähernd trapezförmige Querschnittsform. Durch die etwa rechteckige Gestalt der Klemmplatten 32 und den trapezförmigen Querschnitt wird eine formschlüssige Fixierung des unteren Abschnitts des Führungsrohrs 7 erreicht. Durch die geneigte Anordnung der Längswände der Klemmplatten 32 ergibt sich außerdem eine automatische Zentrierung der Klemmplatten 32 in den Vertiefungen 36. In Fig. 12 ist der Betätigungshebel 12 in klemmender Stellung angeordnet. Die Schraube 33 ist allerdings nicht weit genug in den Lagerbolzen 34 eingeschraubt, so dass sich Spiel zwischen den Klemmplatten 32 und dem unteren Abschnitt 8 des Führungsrohrs 7 ergibt. Zur Einstellung wird die Schraube 33 so weit angezogen, bis die Klemmplatten 32 fest und formschlüssig in den Vertiefungen 36 angeordnet sind. Dabei werden die Arme 30 und 31 geringfügig elastisch verformt. Beim Lösen des Betätigungshebels 12 werden die Klemmplatten 32 aufgrund der Elastizität der Arme 30 und 31 nach außen gedrückt, und das Führungsrohr 7 kann umgeklappt werden. Wie die Figuren 12 und 13 zeigen, kann das Führungsrohr 7 bei gelöster Klemmeinrichtung um eine Schwenkachse 85 verschwenkt werden, die mit der Achse der Schraube 33 zusammenfällt.

Fig. 13 zeigt die Klappeinrichtung 10 in geklemmter Stellung, wobei die Schraube 33 so weit eingeschraubt ist, dass sich eine formschlüssige, spielfreie Fixierung des Führungsrohrs 7 an der Befestigungskonsole 6 ergibt. In dieser Stellung sind die Arme 30 und 31 aufeinander zu elastisch verformt. Die Klemmplatten 32 liegen formschlüssig in Öffnungen 82 der Arme 30 und 31. Die Klemmplatten 32 liegen außerdem formschlüssig zwischen den geneigten Seitenwänden der Vertiefungen 36 am Führungsrohr 7 an. Im Inneren des äußeren Abschnitts 73 des Führungsrohrs 7 ist ein Versteifungselement 76 angeordnet. Das Versteifungselement 76 besitzt vier Längsstreben 78, die jeweils an den die Vertiefungen 36 begrenzenden, schräg verlaufenden Wänden des äußeren Abschnitts 73 des Führungsrohrs 7 anliegen und diese unterstützen und so die Klemmkraft aufnehmen.

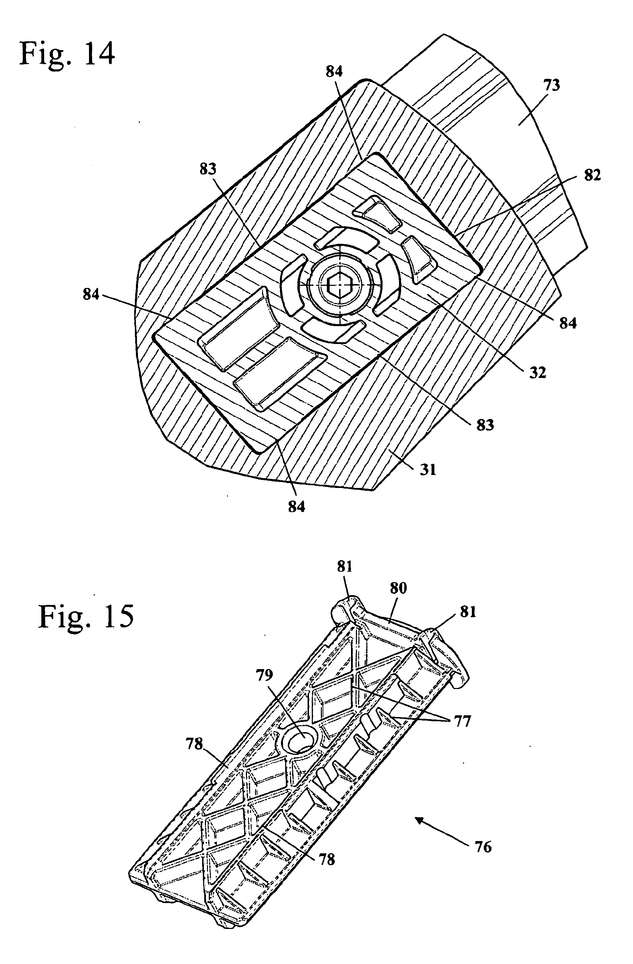

Fig. 14 zeigt einen Schnitt durch den Arm 31 mit in der Öffnung 82 angeordneter Klemmplatte 32. Wie Fig. 14 zeigt, verlaufen die in Längsrichtung der Klemmplatte 32 und des Arms 31 verlaufenden Seitenwände 83 leicht konkav und ins Innere der Klemmplatte 32 gewölbt. Dadurch liegt die Klemmplatte 32 nur in den Endbereichen 84 der Seitenwände 83 an der Öffnung 82 an. Durch die Anlage an den Endbereichen 84 kann eine formschlüssige, spielfreie Fixierung sichergestellt werden.

Fig. 15 zeigt die Gestaltung des Versteifungselements 76 im Einzelnen. Das Versteifungselement 76 besteht aus Kunststoff und wurde in einem Spritzgussverfahren hergestellt. Das Versteifungselement 76 besitzt eine Vielzahl von Versteifungsstreben 77, die sich zwischen den Längsstreben 78 und außerhalb der Längsstreben 78 erstrecken. Etwa mittig besitzt das Versteifungselement 76 eine Öffnung 79 für die Schraube 33. Das Versteifungselement 76 wird in den äußeren Abschnitt 73 des Führungsrohrs 7 von unten eingeschoben und verschließt den äußeren Abschnitt 73. Hierzu besitzt das Versteifungselement 76 eine Abdeckkappe 80. Um einen Austritt von im Führungsrohr 7 angesammelter Flüssigkeit zu erlauben, sind an der Abdeckkappe 80 zwei Kanäle 81 vorgesehen, die nach außen öffnen und über die eventuell angesammelte Flüssigkeit ablaufen kann.

Im Ausführungsbeispiel sind die Klemmplatten 32 im Querschnitt trapezförmig ausgebildet. Es könnte jedoch auch ein gewölbter, beispielsweise ein ovaler Querschnitt vorteilhaft sein.

## Patentansprüche

1. Handgeführtes Arbeitsgerät wie Rasenmäher oder dgl., mit einem Gehäuse (2), an dem mehrere Räder (4) gelagert sind, und mit einem an dem Gehäuse (2) festgelegten Grifflenker (5) zum Führen des Arbeitsgeräts auf dem Boden, wobei der Grifflenker (5) an einem in Fahrtrichtung (57) hinteren Bereich (56) des Gehäuses (2) an dem Gehäuse (2) festgelegt ist, und wobei der Grifflenker (5) ein Führungsrohr (7) umfasst, **wobei das Führungsrohr (7) eine Teleskopeinrichtung (11) zur Längenverstellung besitzt, die einen inneren Abschnitt (72) und einen äußeren Abschnitt (73) des Führungsrohrs (7) miteinander verbindet, wobei die Teleskopeinrichtung (11) eine Führungsbuchse (20) umfasst, dadurch gekennzeichnet, dass die Führungsbuchse (20) mit dem inneren Abschnitt (72) in ausgezogener Stellung der Teleskopeinrichtung (11) einen Anschlag (75) bildet, der ein weiteres Herausziehen des inneren Abschnitts (72) aus dem äußeren Abschnitt (73) verhindert, wobei die Führungsbuchse (20) an dem äußeren Abschnitt (73) fixiert ist, und wobei die Fixierung in mindestens einer Stellung des inneren Abschnitts (72) lösbar ist.**

2. Arbeitsgerät nach Anspruch **1**,
**dadurch gekennzeichnet, dass** die Führungsbuchse (20) mindestens ein Rastelement besitzt, das in einer Öffnung (66) des äußeren Abschnitts (73) verrastet ist, wobei der innere Abschnitt (72) eine Aussparung (49) besitzt, in die das Rastelement zum Lösen der Verrastung ausgelenkt werden kann, wobei die Aussparung (49) insbesondere am Ende (74) des inneren Abschnitts (72) angeordnet ist.

3. Arbeitsgerät nach Anspruch **1** oder **2**,
**dadurch gekennzeichnet, dass** die Teleskopeinrichtung (11) eine lösbare Klemmeinrichtung (40) besitzt, die die beiden Abschnitte (72, 73) des Führungsrohrs (7) fest miteinander verbindet, wobei die Klemmeinrichtung (40) insbesondere einen exzentrisch gelagerten Betätigungshebel (13) besitzt.

4. Arbeitsgerät nach Anspruch **3**,
**dadurch gekennzeichnet, dass** die Klemmkraft der Klemmeinrichtung (40) einstellbar ist.

5. Arbeitsgerät nach einem der Ansprüche **1** bis **4**,
**dadurch gekennzeichnet, dass** die beiden Abschnitte (72, 73) des Führungsrohrs (7) in Umfangsrichtung formschlüssig miteinander verbunden sind.

6. **Arbeitsgerät nach einem der Ansprüche 1 bis 5,**
**dadurch gekennzeichnet, dass das Gehäuse (2) mindestens eine Versteifungsstrebe (53) besitzt, die sich von dem hinteren Bereich (56) des Gehäuses (2) zu einem vorderen Bereich (55) des Gehäuses (2) erstreckt, und wobei der Grifflenker (5) mit der Versteifungsstrebe (53) verbunden ist.**

7. Arbeitsgerät nach Anspruch **6**,
**dadurch gekennzeichnet, dass** die Versteifungsstrebe (53) mit dem Grifflenker (5) formschlüssig verbunden ist.

8. Arbeitsgerät nach Anspruch **6** oder **7**,
**dadurch gekennzeichnet, dass** zwei Versteifungsstreben (53) vorgesehen sind, die mit einer die Versteifungsstreben (53) verbindenden Abdeckung (54) eine Motorhaube (52) des Arbeitsgeräts bilden.

9. Arbeitsgerät nach einem der Ansprüche 1 bis **8**,
**dadurch gekennzeichnet, dass** der Grifflenker (5) eine Befestigungskonsole (6) besitzt, die im hinteren Bereich (56) des Gehäuses (2) an dem Gehäuse (2) festgelegt ist und die mit der Versteifungsstrebe (53) verbunden ist.

10. Arbeitsgerät nach Anspruch **9**,
**dadurch gekennzeichnet, dass** die Befestigungskonsole (6) sich über mehr als drei Viertel der Breite (e) des Gehäuses (2) erstreckt und benachbart zu beiden Längsseiten (41, 42) des Arbeitsgeräts an dem Gehäuse (2) festgelegt ist.

11. Arbeitsgerät nach einem der Ansprüche 1 bis **10**,
**dadurch gekennzeichnet, dass** der Grifflenker (5) einarmig ausgebildet ist, wobei das Führungsrohr (7) des Grifflenkers (5) an einer ersten Längsseite (41) des Arbeitsgeräts verläuft.

12. Arbeitsgerät nach einem der Ansprüche 1 bis **11**,
**dadurch gekennzeichnet, dass** der Grifflenker (5) ein einteiliges Lenkeroberteil (9) umfasst, wobei das Lenkeroberteil (9) einen Kanal (64) besitzt, der sich durch einen am Lenkeroberteil (9) angeformten Abschnitt des Führungsrohrs (7) und den am Lenkeroberteil (9) ausgebildeten Griffabschnitt (37) erstreckt, wobei das Lenkeroberteil (9) insbesondere aus Kunststoff besteht.

## Claims

1. Manually operated work device such as a lawnmower or similar, having a housing (2), on which a plurality of wheels (4) are mounted, and having a guide rod (5), fixed to the housing (2), for guiding the work device on the ground, the guide rod (5) being fixed on a region (56) of the housing (2), to the rear in the direction of travel (57), to the housing (2), and the guide rod (5) including a guide tube (7), wherein the guide tube (7) has a telescopic means (11) for adjusting the length, the telescopic means (11) connecting an inner section (72) and an outer section (73) of the guide tube (7) to each other, the telescopic means (11) including a guide sleeve (20),
**characterised in that** the guide sleeve (20) forms, with the inner section (72), in the pulled-out position of the telescopic means (11), a stop (75) which prevents further pulling of the inner section (72) out of the outer section (73), wherein the guide sleeve (20) is fixed to the outer section (73) and wherein the fixing can be released in at least one position of the inner section (72).

2. Work device according to claim 1,
**characterised in that** the guide sleeve (20) has at least one detent element which engages in an opening (66) of the outer section (73), the inner section (72) having a recess (49), into which the detent element can be deflected in order to release the engagement, the recess (49) being arranged in particular at the end (74) of the inner section (72).

3. Work device according to claim 1 or 2,
**characterised in that** the telescopic means (11) has a detachable clamping means (40) fixedly connecting the two sections (72, 73) of the guide tube (7) to each other, wherein the clamping means (40) has in particular an eccentrically mounted actuating lever (13).

4. Work device according to claim 3,
**characterised in that** the clamping force of the clamping means (40) can be adjusted.

5. Work device according to one of the claims 1 to 4,
**characterised in that** the two sections (72, 73) of the guide tube (7) are connected to each other in a shape locking way in the circumferential direction.

6. Work device according to one of the claims 1 to 5,
**characterised in that** the housing (2) has at least one reinforcing strut (53) extending from the rear region (56) of the housing (2) to a front region (55) of the housing (2), and wherein the guide rod (5) is connected to the reinforcing strut (53).

7. Work device according to claim 6,
**characterised in that** the reinforcing strut (53) is connected in a shape locking way to the guide rod (5).

8. Work device according to claim 6 or 7,
**characterised in that** two reinforcing struts (53) are provided which form, with a cover (54) connecting the reinforcing struts (53), a motor hood (52) of the work device.

9. Work device according to one of the claims 1 to 8,
**characterised in that** the guide rod (5) has a fixing bracket (6) which is fixed in the rear region (56) of the housing (2) to the housing (2) and is connected to the reinforcing strut (53).

10. Work device according to claim 9,
**characterised in that** the fixing bracket (6) extends over more than three quarters of the width (e) of the housing (2) and is fixed adjacent to the two longitudinal sides (41, 42) of the work device on the housing (2).

11. Work device according to one of the claims 1 to 10,
**characterised in that** the guide rod (5) is formed with one arm, wherein the guide tube (7) of the guide rod (5) extends on a first longitudinal side (41) of the work device.

12. Work device according to one of the claims 1 to 11,
**characterised in that** the guide rod (5) includes a one-part upper guide part (9), the upper guide part (9) having a channel (64) extending through a section of the guide tube (7) formed on the upper guide part (9) and through the guide section (37) formed on the upper guide part (9), wherein the upper guide part (9) consists in particular of plastic.

## Revendications

1. Appareil guidé à la main tel qu'une tondeuse à gazon ou un dispositif similaire, avec un carter (2) sur lequel sont montées plusieurs roues (4), et avec un guidon (5) qui est fixé au carter (2) et qui est destiné au guidage de l'appareil sur le sol, étant précisé que le guidon (5) est fixé au carter (2) sur une zone arrière (56), dans le sens de marche (57), du carter (2), et que le guidon (5) comprend un tube de guidage (7), que le tube de guidage (7) présente un dispositif télescopique (11) pour le réglage en longueur, qui relie une section intérieure (72) et une section extérieure (73) du tube de guidage (7), et que le dispositif télescopique (11) comprend un manchon de guidage (20),
**caractérisé en ce que** le manchon de guidage (20) forme avec la section intérieure (72), dans la position déployée du dispositif télescopique (11), une butée (75) qui empêche la poursuite du déploiement de la section intérieure (72) hors de la section extérieure (73), étant précisé que le manchon de guidage (20) est fixé à la section extérieure (73) et que la fixation est amovible dans au moins une position de la section intérieure (72).

2. Appareil selon la revendication 1,
**caractérisé en ce que** le manchon de guidage (20) comporte au moins un élément d'enclenchement qui est enclenché dans une ouverture (66) de la section extérieure (73), étant précisé que la section intérieure (72) présente un évidement (49) dans lequel l'élément d'enclenchement peut être dévié pour supprimer l'enclenchement, et que l'évidement (49) est disposé en particulier à l'extrémité (74) de la section intérieure (72).

3. Appareil selon la revendication 1 ou 2,
**caractérisé en ce que** le dispositif télescopique (11) comporte un dispositif de serrage amovible (40) qui relie solidement les deux sections (72, 73) du tube de guidage (7) l'une à l'autre, étant précisé que le dispositif de serrage (40) comporte en particulier un levier d'actionnement (13) à montage excentrique.

4. Appareil selon la revendication 3,
**caractérisé en ce que** la force de serrage du dispositif de serrage (40) est réglable.

5. Appareil selon l'une des revendications 1 à 4,
**caractérisé en ce que** les deux sections (72, 73) du tube de guidage (7) sont reliées par complémentarité de forme dans le sens circonférentiel.

6. Appareil selon l'une des revendications 1 à 5,
**caractérisé en ce que** le carter (2) comporte au moins un raidisseur (53) qui s'étend de la zone arrière (56) du carter (2) à une zone avant (55) du carter (2), et que le guidon (5) est relié au raidisseur (53).

7. Appareil selon la revendication 6,
**caractérisé en ce que** le raidisseur (53) est relié au guidon (5) par complémentarité de forme.

8. Appareil selon la revendication 6 ou 7,
**caractérisé en ce qu'**il est prévu deux raidisseurs (53), qui forment avec un recouvrement (54) reliant les raidisseurs (53) un capot (52) de l'appareil.

9. Appareil selon l'une des revendications 1 à 8,
**caractérisé en ce que** le guidon (5) comporte une console de fixation (6) qui est fixée au carter (2) dans la zone arrière (56) de celui-ci et qui est reliée au raidisseur (53).

10. Appareil selon la revendication 9,
**caractérisé en ce que** la console de fixation (6) s'étend sur plus de trois quarts de la largeur (e) du carter (2) et est fixée au carter (2) près des deux côtés longitudinaux (41, 42) de l'appareil.

11. Appareil selon l'une des revendications 1 à 10,
**caractérisé en ce que** le guidon (5) a un seul bras, étant précisé que le tube de guidage (7) du guidon (5) s'étend sur un premier côté longitudinal (41) de l'appareil.

12. Appareil selon l'une des revendications 1 à 11,
**caractérisé en ce que** le guidon (5) comprend un élément supérieur de guidon d'une seule pièce (9), étant précisé que l'élément supérieur de guidon (9) comporte un conduit (64) qui traverse une section du tube de guidage (7) rapportée sur ledit élément supérieur de guidon (9) et la poignée (37) formée sur l'élément supérieur de guidon (9), étant précisé que l'élément supérieur de guidon (9) est en particulier en matière plastique.
